**Europäisches Patentamt**

**European Patent Office**

**Office européen des brevets**

(19)

(11) Veröffentlichungsnummer : **0 053 777**
**B2**

(12) **NEUE EUROPÄISCHE PATENTSCHRIFT**

(45) Veröffentlichungstag der neuen Patentschrift :
09.11.88

(51) Int. Cl.⁴ : **C 02 F 11/02,** C 02 F 11/06,
C 02 F 3/12, C 02 F 3/26

(21) Anmeldenummer : 81109992.8

(22) Anmeldetag : 26.11.81

(54) **Verfahren und Vorrichtung zur Erwärmung von organischen Abfallstoffen mittels biologischer Behandlung.**

(30) Priorität : 05.12.80 CH 8989/80

(43) Veröffentlichungstag der Anmeldung :
16.06.82 Patentblatt 82/24

(45) Bekanntmachung des Hinweises auf die Patenterteilung : 13.06.84 Patentblatt 84/24

(45) Bekanntmachung des Hinweises auf die Entscheidung
über den Einspruch : 09.11.88 Patentblatt 88/45

(84) Benannte Vertragsstaaten :
AT BE CH DE FR GB IT LI LU NL SE

(56) Entgegenhaltungen :
EP-A- 0 011 573
AT-B-   317 104
CH-A-   484 843
DE-A- 2 253 477
DE-A- 2 649 178
DE-A- 2 710 109
DE-B- 2 528 800
DE-C-   946 547
DE-C- 2 418 704

(73) Patentinhaber : UTB Umwelttechnik Buchs AG
Rheinstrasse 14b
CH-9470 Buchs/SG (CH)

(72) Erfinder : Moilliet, Guy
Bahnhofstrasse
CH-9475 Sevelen (CH)

(74) Vertreter : Riederer, Conrad A., Dr.
Bahnhofstrasse 10
CH-7310 Bad Ragaz (CH)

EP 0 053 777 B2

## Beschreibung

Die Erfindung betrifft ein Verfahren zur Erwärmung von organischen Abfallstoffen in Form von Klärschlamm oder Jauche mittels biologischer Behandlung, wobei Sauerstoff in Form von Luft in den in einem feststehenden Belüftungsbehälter befindlichen Abfallstoff eingeführt wird, das aus dem Abfallstoff austretende Gas teilweise wieder in einem Kreislauf in den Abfallstoff zurückgeführt wird, das zurückgeführte Gas mit Luft angereichert wird, eine Temperatur aufrecht erhalten wird, die ausreicht, um Enterobactereaceen abzutöten, und überschüssige Wärme abgeführt wird.

Bei einem bekannten solchen Verfahren wird eine Einrichtung verwendet, die im wesentlichen aus einem Belüftungsbehälter besteht, bei welchem im Bereich des Bodens ein Sogbelüfter angeordnet ist, welcher Frischluft in den Klärschlamm einleitet. Auf diese Weise kann eine Selbsterwärmung von 50° bis 70 °C erzielt werden (CH-A 618 149). Eine Temperatur von 60 °C genügt in der Regel, um in kurzer Zeit Enterobakteriaceen, z. B. Salmonellen abzutöten. Wenn auch dieses Verfahren den Vorteil besitzt, dass die zur Behandlung des Klärschlamms benötigte Wärme selbst durch die Aktivität von thermophilen Mikroorganismen erzeugt wird, hat es doch den Nachteil, dass es gefährlich nahe in einem Temperaturbereich arbeitet, bei dem Salmonellen noch überleben können. An eine andersweitige Nutzung der biologisch erzeugten Wärme ist unter diesen Umständen nicht zu denken, weil dann die Temperatur noch tiefer zu liegen käme.

Das bekannte Verfahren hat auch den Nachteil, dass es energetisch nicht günstig ist, weil ein Teil der eingeführten Luft oder des Sauerstoffgases wieder aus dem Klärschlamm als warmes Gas und zusammen mit Wasserdampf entweicht, so dass ein grosser Wärmeverlust entsteht. Wegen diesen Verlusten ist ein erheblicher Abbau an organischer Substanz nötig, um den Klärschlamm auf die gewünschte Temperatur zu bringen. Je mehr organische Substanz jedoch abgebaut wird, desto weniger steht für die nachfolgende Faulung zur Verfügung, so dass in der Faulanlage auch weniger Klärgas anfällt.

Es ist jedoch bekannt, dass höhere Temperaturen erzeugt werden können, wenn statt Luft reiner Sauerstoff verwendet wird (DE-B2-2 528 000). Die Verwendung von reinem Sauerstoff ist jedoch recht kostspielig, zumal der Sauerstoffverbrauch relativ gross ist.

Es ist auch bekannt, zur biologischen Behandlung von organisch verunreinigtem Abwasser Sauerstoff in Form von reinem Sauerstoff bzw. von mit reinem Sauerstoff angereicherter Luft in ein Abwasserbelebtschlammgemisch einzuführen und das austretende, Stoffwechselprodukte aufweisende Gasgemisch aufzufangen und als Kreislaufgas im Kreislauf zu führen (AT-A-317 104). Auch dieses Verfahren sieht die Verwendung von reinem Sauerstoff bzw. die Beimischung von Sauerstoff vor, was ebenfalls erhebliche Kosten für die Beschaffung des Sauerstoffes in grossen Mengen verursacht.

In der DE-OS 22 53 477 werden verschiedene Verfahren aufgezeigt, mit denen die notwendigen hohen Temperaturen auch ohne Verwendung von reinem Sauerstoff erzeugt werden können. Bei all diesen Verfahren wird von der Erkenntnis ausgegangen, dass Luft nur zu einem Fünftel aus Sauerstoff besteht, dass aber gleich viel Sauerstoff in den Klärschlamm eingebracht werden kann wie bei der Verwendung von reinem Sauerstoff, wenn mit entsprechend hohen Drücken gearbeitet wird.

Bei den aus dieser Schrift bekannten Verfahren wird die Sauerstofflöslichkeit bei grobblasiger Belüftung durch Druck gesteigert.

Die Abbildung 9 dieser Schrift betrifft ein Verfahren gemäß dem einleitenden Teil des Anspruchs 1 des vorliegenden Patents, bei dem das Behandlungsgas ebenfalls im Kreislauf geführt wird. Bei dem bekannten Verfahren wird das rückgeführte und mit Luftsauerstoff angereicherte Gas im oberen Teil des Belüftungsbehälters in Schlamm eingeführt und mit Hilfe eines Mischaggregats z. B. in Form eines Rührflügels verteilt.

Die DE-A 24 18 704 weist auf das Problem hin, dass bei einem feststehenden Belüftungsbehälter, der von unten belüftet wird, im oberen Bereich des Reaktors die Oxidationsprozesse sehr stark zurückgehen, so dass dort die hohen zur Abtötung schädlicher Keime erforderlichen Temperaturen nicht erreicht werden. Um dies zu vermeiden wird dann ein Verfahren offenbart, das durch gekennzeichnet ist, dass an der Stelle einer starken Sauerstoffverarmung das Gas abgezogen, mit Sauerstoff angereichert und daraufhin unmittelbar oberhalb der Abzugstelle wieder in den Reaktionsraum eingeführt wird. Dies erfordert aber einen hohen apparativen Aufwand, wobei unklar bleibt, wie das Gas abgezogen wird, ohne dass Gefahr besteht, dass die Abzugstellen durch den zu behandelnden Klärschlamm und/oder Müll verstopft werden.

Es ist Aufgabe der vorliegenden Erfindung, ein Verfahren der eingangs erwähnten Art zu schaffen, mit welchem ohne Verwendung von reinem Sauerstoff und ohne die Verwendung von Druckgefässen als Belüftungsbehälter relativ hohe Temperaturen erzeugt werden, die eine sichere Inaktivierung der Salmonellen, Wurmeier, usw. ermöglichen und gegebenenfalls auch eine Nutzung der biologischen Wärme gestatten.

Gemäß der vorliegenden Erfindung wird dies dadurch erreicht, dass das zurückgeführte Gas mindestens zeitweilig mit Luft angereichert wird, indem durch eine Oeffnung im Kreislauf ein Sauerstoffkonzentrationsausgleich zwischen dem im Kreislauf befindlichen Gas und der Umgebungsluft stattfindet und dass die Rückführung des Gases dadurch erfolgt, dass es durch eine Wasserstrahlpumpe einem Abfallstoffstrom beigemengt wird, der von einer Pumpe aus einem Teil des Belüftungsbehälters zu einem anderen Teil des Belüftungsbehälters gepumpt wird.

Beim erfindungsgemäßen Verfahren steigt die Temperatur in den Abfallstoffen durch Selbsterwärmung rasch auf etwa 70 °C an, also auf eine Temperatur, bei welcher in kurzer Zeit eine Hygienisierung der Abfallstoffe stattfindet. Auch wenn beachtliche Wärmemengen abgeführt werden, kann dieses Temperaturniveau gehalten werden. Es ist daher auch möglich, erzeugte Wärme für andere Zwecke zu nutzen, z. B. zur Vorwärmung der frischen Abfallstoffe oder auch noch für Heizzwecke. So kann das Verfahren beispielsweise für die Aufbereitung von Jauche verwendet werden, wobei ein Teil der erzeugten Wärme mit einem Wärmetauscher für die Heizung eines Bauernhauses abgeführt wird. Die anfallende Wärme kann im Bereich von etwa 85 °C bis hinunter auf etwa 30 °C genutzt werden, ohne dass dadurch der thermophile Abbau der Abfallstoffe beeinträchtigt wird.

Bei der Verwendung des erfindungsgemässen Verfahrens zur Hygienisierung von Klärschlamm steht das Bestreben im Vordergrund, den Klärschlamm durch Selbsterwärmung rasch auf etwa 70 °C zu bringen. Da beim erfindungsgemässen Verfahren keine hohen Verdampfungsverluste auftreten, wird dieses Ziel erreicht, ohne dass viel organische Substanz abgebaut wird. Es steht daher mehr organische Substanz zur Verfügung, um bei der nachfolgenden Faulung Klärgas zu erzeugen. Dieses Klärgas ist bekanntlich sehr wertvoll für Heiz- oder motorische Zwecke.

Die Anreicherung des zurückgeführten Gases mit Luft erfolgt durch eine Oeffnung im Kreislauf, durch welche ein Sauerstoff-Konzentrationsausgleich zwischen dem im Kreislauf befindlichen Gas und der Umgebungsluft stattfindet. Wenn also beispielsweise im Belüftungsbehälter eine Oeffnung vorhanden ist, so kann durch diese Oeffnung Sauerstoff aus der Umgebungsluft eindringen und Kohlendioxid entweichen. Es genügt dabei eine relativ kleine Oeffnung, so dass der Wärmeverlust klein bleibt.

Die Erfindung betrifft auch eine Vorrichtung zur Durchführung des Verfahrens mit mindestens einem Belüftungsbehälter und mindestens einer Belüftungsvorrichtung, wobei die Belüftungsvorrichtung mit ihrem Eingang an den Oberteil des Belüftungsbehälters und mit ihrem Ausgang an den Unterteil des Belüftungsbehälters angeschlossen ist. Eine derart ausgestaltete Vorrichtung ist bereits aus der EP-A-11 573 bekannt, wobei diese aber zur Begasung von Jauche mit reinem Sauerstoff vorgesehen ist. Es ist jedoch keine Einrichtung zur Kreislaufführung des Gasgemisches vorgesehen.

Gemäss der Erfindung ist die Vorrichtung zur Durchführung des Verfahrens dadurch gekennzeichnet, dass durch den Anschluss der Belüftungsvorrichtung an den Oberteil und Unterteil des Belüftungsbehälters ein Kreislauf für das aus den Abfallstoffen austretende Gas gebildet wird, dass der Kreislauf eine Oeffnung aufweist, um einen Sauerstoff-Konzentrationsausgleich zwischen dem im Kreislauf befindlichen Gas und der Umgebungsluft zu ermöglichen, und dass die Belüftungsvorrichtung eine Wasserstrahlpumpe ist, durch welche mittels einer Pumpe Abfallstoffe von einem Behälterteil zu einem anderen Behälterteil gepumpt werden können.

Da der Kreislauf eine Oeffnung aufweist, wird dem Umstand Rechnung getragen, dass bei der biologischen Wärmeerzeugung auch Kohlendioxid erzeugt und Sauerstoff verbraucht wird und somit einerseits für die Abfuhr des Kohlendioxids und andererseits für den Nachschub von Sauerstoff gesorgt werden muss.

Da die Belüftungsvorrichtung eine Wasserstrahlpumpe ist, durch welche der Klärschlamm durch eine Pumpe von einem Behälterteil zu einem anderen Behälterteil gepumpt wird, diffundiert ein erheblicher Anteil des Gases in den Klärschlamm, währenddem ein anderer Teil des Gases in Form von kleinen Bläschen im Klärschlamm verteilt wird. Je mehr Sauerstoff in den Klärschlamm diffundiert und je kleiner der Durchmesser der eingeführten Bläschen ist, desto höher ist die biologische Wirksamkeit des eingeführten Sauerstoffes.

Durch die beim Umpumpen des Klärschlamms erfolgende Belüftung wird der ganze Inhalt des Belüftungsbehälters gleichmässig mit Sauerstoff versorgt, so dass auch eine gleichmässige und rasche Erwärmung des ganzen Behälterinhalts erfolgt.

Die beschriebene Oeffnung ist vorteilhaft durch ein Ventil verschliessbar. Durch periodisches Schliessen und Oeffnen des Ventils können unerwünschte Wärmeverluste noch weiter reduziert werden. Das Ventil kann auch als Regel-Mischventil für im Kreislauf befindliches Gas und Frischluft eingesetzt werden.

Es erweist sich auch als zweckmässig, an der genannten Oeffnung ein Geruchsfilter anzuschliessen. Als solches kann ein sogenannter Erdfilter dienen.

Wenn die genannte Oeffnung im Kreislauf durch ein Ventil verschliessbar ist, so wird das Ventil zweckmässigerweise durch eine Sauerstoff- und/oder Kohlendioxidsonde entsprechend der Sauerstoff- und/oder Kohlendioxidkonzentration im Belüftungsbehälter gesteuert. Auf diese Weise kann ein optimaler Betrieb der Anlage erreicht werden.

Währenddem bisher die Selbsterwärmung lediglich für die Hygienisierung von Klärschlamm vorgesehen wurde, ermöglicht es die vorliegende Erfindung, mehr Wärme zu erzeugen, als für die Hygienisierung von Klärschlamm notwendig ist. Wenn andere Abfallstoffe verwendet werden, z. B. Jauche, kann auch die Wärmegewinnung in den Vordergrund gestellt werden. Ein Ausführungsbeispiel der Erfindung sieht daher vor, dass am Belüftungsbehälter ein Wärmetauscher vorgesehen ist, um die durch die Abfallstoffe erzeugte Wärme zu nutzen. So kann beispielsweise die durch thermophile Bakterien in Jauche erzeugte Wärme zur Heizung eines Bauernhauses benutzt werden.

Zweckmässigerweise weist der Kreislauf ein Ventil auf, um Luftsauerstoff in den Kreislauf einzuführen. Die Verwendung eines Ventils ermöglicht es, die Sauerstoffzufuhr entsprechend dem Bedarf von Hand oder automatisch zu dosieren.

Es ist auch zweckmässig, wenn der Unterteil des Belüftungsbehälters an eine Vorlage angeschlossen ist. Dies hat den Vorteil, dass der aus dem Belüftungsbehälter entnommene Klärschlamm vor dem Abtransport in den Faulraum für eine kurze Zeit gelagert werden kann, so dass die im Schlamm enthaltenen Gasblasen Zeit haben, an die Oberfläche zu steigen. Dies hat den Vorteil, dass praktisch kein Gas aus dem Belüftungsbehälter in die Faulanlage kommt, wo es die Qualität des dort erzeugten Klärgases beeinträchtigen würde und zu Störungen im Faulprozess führen könnte.

Um Geruchsprobleme zu vermeiden, wird zweckmässigerweise eine Entlüftungsleitung von der Vorlage zum Geruchfilter geführt.

Vorteilhaft weist die Vorlage zwei Kammern auf und es sind Ventile vorgesehen, um diese Kammer abwechslungsweise zu füllen und zu leeren. Im Betrieb der Anlage kann daher immer gleichzeitig mit dem Einpumpen einer Charge neuen Klärschlamms in den Belüftungsbehälter eine Charge behandelten Klärschlamms aus einer Kammer abgezogen werden, währenddem gleichzeitig die andere Kammer mit behandeltem Klärschlamm gefüllt wird. Somit kann auch der Wärmetauscher als Durchflusswärmetauscher ausgebildet werden, was zu Kostenersparnissen führt.

Vorteilhaft ist eine Stützheizung für die von einem Behälterteil zu einem andern Behälterteil umgepumpten Abfallstoffe vorgesehen. Wenn also z. B. der zugeführte Klärschlamm eine so niedrige Temperatur besitzt, dass ein rasches Anlaufen der biologischen Tätigkeit nicht gewährleistet ist, kann er so mit wenig Aufwand auf die notwendige Temperatur gebracht werden.

Ausführungsbeispiele der Erfindung werden nun unter Bezugnahme auf die Zeichnung beschrieben. Es zeigt :

Figur 1  ein erstes Ausführungsbeispiel einer Vorrichtung zur biologischen Wärmeerzeugung, und

Figur 2  ein zweites Ausführungsbeispiel einer Vorrichtung zur biologischen Wärmeerzeugung.

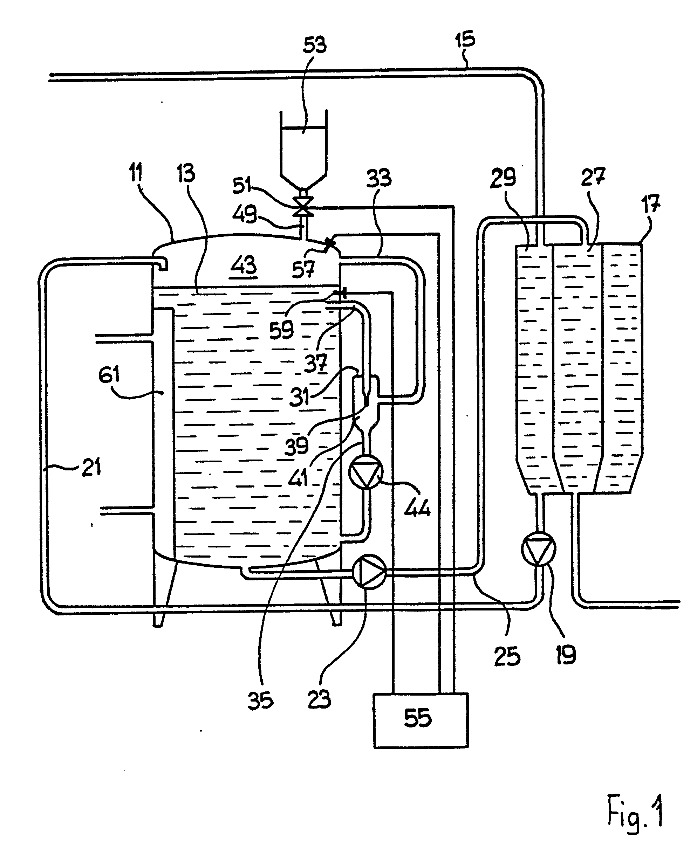

In Fig. 1 ist der Belüftungsbehälter 11 zur Aufnahme von Klärschlamm 13 vorgesehen, der von einer Kläranlage über die Leitung 15 zuerst einem Schlamm/Schlamm-Wärmetauscher 17 zugeführt wird, von dem er mittels der Pumpe 19 über die Leitung 21 in den Belüftungsbehälter gepumpt werden kann. Behandelter Klärschlamm aus dem Belüftungsbehälter 11 kann mit der Pumpe 23 über die Leitung 25 in die zentrale Kammer 27 des Wärmetauschers 17 gepumpt werden. Dabei heizt der warme Klärschlamm der Kammer 27 den in der äusseren Kammer 29 befindlichen kalten Klärschlamm auf, so dass dieser mit einer Temperatur in den Belüftungsbehälter kommt, bei welcher ein Abbau durch thermophile Bakterien erfolgen kann. Die Füllung des Belüftungsbehälters erfolgt chargenweise, wobei immer ein Rest behandelter Klärschlamm im Belüftungsbehälter 11 belassen wird. Da sich in diesem Rest bereits sehr viele thermophile Bakterien befinden, kommt die Selbsterwärmung des ganzen Inhalts sehr rasch in Gang.

Die thermophilen Bakterien benötigen für ihre Abbauarbeit Sauerstoff. Dieser wird dem Belüftungsbehälter 11 mit einer Wasserstrahlpumpe 31 zugeführt. Diese Wasserstrahlpumpe 31 ist mit ihrem Eingang 33 an den Oberteil des Belüftungsbehälters und mit ihrem Ausgang 35 an den Unterteil des Belüftungsbehälters angeschlossen. Klärschlamm aus dem Oberteil des Belüftungsbehälters fliesst durch die Leitung 37 zu einer Düse 39 und verlässt diese in einer Kammer 41, die über die Leitung 33 mit dem mit Gas gefüllten Raum 43 des Belüftungsbehälters 11 verbunden ist. Der Strahl aus der Düse 39 reisst somit das in der Kammer 41 enthaltene Gas mit, das teilweise in den Klärschlamm diffundiert und teilweise in Form von kleinen Luftbläschen mitgenommen wird. Durch die Pumpe 44 wird der aus der Düse 39 fliessende Klärschlamm unten in den Belüftungsbehälter 11 eingeführt.

Der Belüftungsbehälter 11 weist eine Oeffnung 49 auf, durch welche ein Sauerstoff-Konzentrationsausgleich zwischen dem im Kreislauf befindlichen Gas und der Umgebungsluft erfolgen kann. Im Betrieb reichert sich nämlich das im Raum 43 enthaltene Gas wegen der biologischen Aktivität im Klärschlamm mit Kohlendioxid an, währenddem der Sauerstoffanteil abnimmt. Durch die Oeffnung 49 erfolgt jedoch dann ein Ausgleich, indem Kohlendioxid austreten und Luftsauerstoff eintreten kann. Beim gezeigten Ausführungsbeispiel ist noch ein Ventil 51 und ein Filter 53 dargestellt. Das Ventil 51 wird durch eine Steuereinrichtung 55 gesteuert, an welche eine Kohlendioxidsonde 57 und/oder eine Sauerstoffsonde 59 angeschlossen sind. Die Kohlendioxidsonde 57 im Raum 43 kann einen übermässig hohen Gehalt an Kohlendioxid feststellen, worauf dann die Steuerung 55 eine Oeffnung des Ventils 51 bewirkt. Alternativ oder zusätzlich kann die Sauerstoffsonde 59 im Klärschlamm einen geringen Sauerstoffgehalt feststellen, so dass die Steuerung 55 ein Oeffnen des Ventils 51 veranlasst. Das Filter 53 wirkt als Geruchfilter, lässt aber einen Austausch von Luftsauerstoff in den Belüftungsbehälter 11 und von Kohlendioxid aus dem Belüftungsbehälter 11 zu.

Mit der Bezugsziffer 61 ist ein im Belüftungsbehälter 11 angeordneter Wärmetauscher dargestellt, der er ermöglicht, überschüssige Wärme beispielsweise zu Heizzwecken abzuführen. So kann beispielsweise die bei der Behandlung von Jauche entstehende Wärme zum Heizen des Bauernhauses verwendet werden.

Um Wärmeverluste zu vermeiden, ist der Belüftungsbehälter 11 vorteilhaft thermisch isoliert. Auch die weiteren Anlageteile werden, um Wärmeverluste zu vermeiden, zweckmässigerweise mit einer thermischen Isolation versehen.

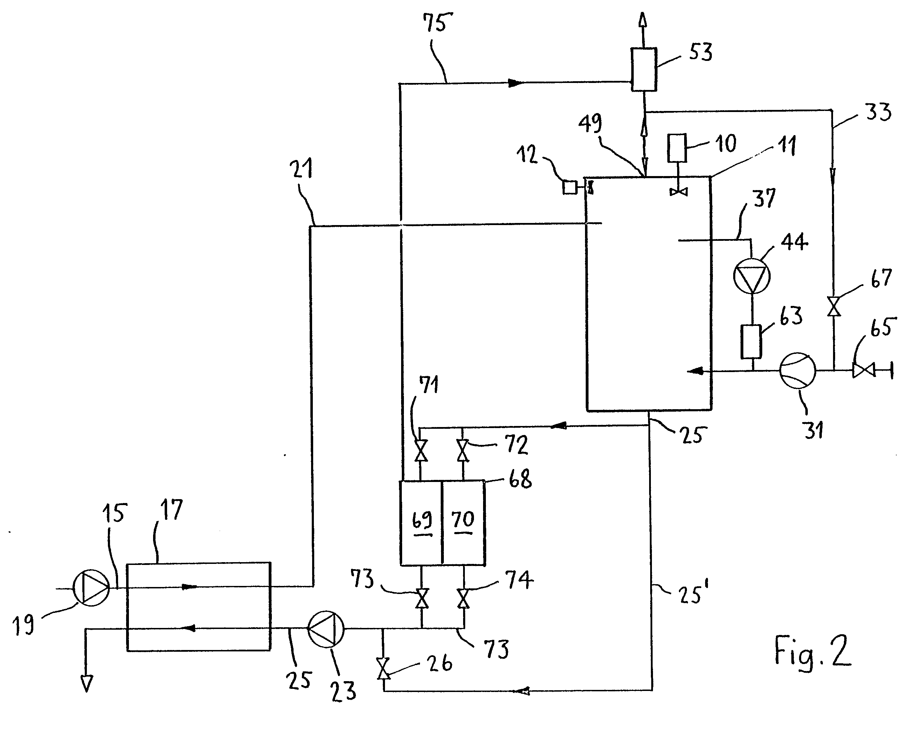

Beim Ausführungsbeispiel nach Figur 2 ist wiederum ein Belüftungsbehälter 11 zur Aufnahme von Klärschlamm vorgesehen, der von einer Kläranlage her mittels der Pumpe 19 über die Leitung 15 zuerst einem Schlamm/Schlamm-Wärmetauscher 17 zugeführt wird, von dem er über die Leitung 21 in den Belüftungsbehälter 11 fliesst. Der Wärmetauscher 17 ist als Durchflusswärmetauscher ausgebildet, wobei der behandelte warme Klärschlamm mittels der Pumpe 23 über die Leitung 25 zum Wärmetauscher 17 gepumt wird und dort im Gegenstrom den kalten Klärschlamm aufheizt. Der Klärschlamm in der Leitung 21 kommt daher mit einer Temperatur in den Belüftungsbehälter, bei welcher ein Abbau durch thermophile Bakterien erfolgen kann.

Zur Belüftung ist wiederum eine Wasserstrahlpumpe 31 vorgesehen, mit welcher Gas dem Klärschlammstrom beigemengt werden kann, der von der Pumpe 44 aus dem Oberteil des Belüftungsbehälters durch die Leitung 37 unten in den Belüftungsbehälter eingeführt wird. In der Leitung 37 ist eine Zusatzheizung 63 vorgesehen, mit welcher der Schlamm gegebenenfalls aufgeheizt werden kann.

Das Gas, welches von der Wasserstrahlpumpe dem Klärschlamm beigemengt wird, stammt zum Teil aus dem Belüftungsbehälter 11. Es fliesst aus der Oeffnung 49 über die Leitung 33 zur Belüftungsvorrichtung 31. Es ist jedoch ein Ventil 65 vorgesehen, um Umgebungsluft in das im Kreislauf befindliche Gas einzuführen. Dieses Ventil 65 ist von Hand oder automatisch regelbar. Ein weiteres Ventil 67 ermöglicht es, den Kreislauf zu drosseln oder zu unterbrechen.

Das an der Leitung 33 angeschlossene Filter 53 ermöglicht den Austritt von Gasen, vornehmlich Kohlendioxid, aus dem Kreislauf, ohne dass eine Geruchsbelästigung auftritt.

Um eine Schaumbildung zu vermeiden, ist ein Schaumschneider 10 vorgesehen. Um dessen Laufzeit auf das notwendige Minimum zu reduzieren, wird er von einem Schaumfühler 12 je nach Bedarf ein- bzw. ausgeschaltet.

Die beschriebene Ausgestaltung des Gaskreislaufes unterscheidet sich von jenem des ersten Ausführungsbeispiels in erster Linie dadurch, dass der Austritt von Kohlendioxid und der Eintritt von Luftsauerstoff getrennt erfolgt. Dies ermöglicht eine bessere Regelung.

Während beim ersten Ausführungsbeispiel der behandelte Klärschlamm direkt zum Wärmetauscher gepumt wird, sieht das vorliegende Ausführungsbeispiel vor, dass der Klärschlamm zuerst in eine Kammer 69, 70 einer Vorlage 68 abgelassen und dann später mittels der Pumpe 23 zum Wärmetauscher 17 gepumt werden kann. Zur Steuerung dieser Vorgänge sind die Ventile 71 bis 74 vorgesehen. Die Kammern 69, 70 sind so bemessen, dass sie je etwa eine Charge von z. B. 5 bis 10 % des Inhalts des Belüftungsbehälters aufnehmen können. Eine Charge verbleibt während etwa 30 Minuten in der Kammer 69 oder 70. Während dieser Zeit findet eine Entgasung des Klärschlammes statt. Das Gas kann über die Leitung 75 zum Filter 53 fliessen und in die Umgebungsluft entweichen. Ein Bypass 25' ist vorgesehen, durch welchen Klärschlamm gegebenenfalls unter Umgehung der Vorlage 68 zum Wärmetauscher 17 fliessen kann. Normalerweise ist jedoch das Ventil 26 geschlossen.

Wie bereits erwähnt wurde, hat die Vorlage 68 die Aufgabe, eine Entgasung des Klärschlammes zu ermöglichen, bevor dieser in den Faulraum kommt. Dadurch wird vermieden, dass im Faulraum dem bei der Faulung entstehenden Methan unbrennbares Gas zugeführt wird, was die Qualität des Faulgases als Brenngas verschlechtern würde. Eine weitere Aufgabe der Vorlage 68 besteht darin, die Verwendung eines Durchflusswärmetauschers zu ermöglichen. Ein solcher Wärmetauscher erfordert, dass gleichzeitig Klärschlamm in den Leitungen 21 und 25 fliesst. Wenn aber dem Belüftungsbehälter unten Klärschlamm entnommen und oben Klärschlamm eingeführt wird, besteht die Gefahr, dass auch Spuren unbehandelten Klärschlammes wieder abgeführt werden. Dies muss auf alle Fälle vermieden werden, damit nicht Enterobakteriazeen, z. B. Salmonellen, in den Faulraum gelangen. Dies wird denn auch durch das Dazwischenschalten der Vorlage 68 vermieden. Die Vorlage 68 ermöglicht es nämlich, zuerst behandelten Klärschlamm, z. B. in die Kammer 70 abzulassen, aus welcher er dann eine halbe Stunde später, wenn er weitgehend entgast ist, durch den Wärmetauscher 17 gepumpt werden kann, währenddem frischer Klärschlamm durch den Wärmetauscher 17 dem Belüftungsbehälter 11 zugeführt wird.

Um Wärmeverluste zu vermeiden, ist der Belüftungsbehälter 11 und die Vorlage vorteilhaft thermisch isoliert. Auch die weiteren Anlageteile werden, um Wärmeverluste zu vermeiden, zweckmässigerweise mit einer thermischen Isolation versehen.

Die Erfindung ist nicht auf die beschriebenen Ausführungsbeispiele beschränkt. So sind je nach Verwendungszweck des Verfahrens Modifikationen bei der Vorrichtung möglich. Es kann beispielsweise der Klärschlamm in verschiedene Behälter umgepumpt werden.

## Patentansprüche

1. Verfahren zur Erwärmung von organischen Abfallstoffen in Form von Klärschlamm oder Jauche mittels biologischer Behandlung, wobei Sauerstoff in Form von Luft in den in einem feststehenden Belüftungsbehälter (11) befindlichen Abfallstoff eingeführt wird, das aus dem Abfallstoff austretende Gas teilweise wieder in einem Kreislauf in den Abfallstoff zurückgeführt wird, das rückgeführte Gas mit Luft angereichert wird, eine Temperatur aufrecht erhalten wird, die ausreicht, um Enterobaktereaceen abzutöten, und überschüssige Wärme abgeführt wird, dadurch gekennzeichnet, dass das zurückgeführte Gas mindestens zeitweilig mit Luft angereichert wird, indem durch eine Oeffnung im Kreislauf ein Sauerstoffkonzentrationsausgleich zwischen dem im Kreislauf befindlichen Gas und der Umgebungsluft stattfindet und

dass die Rückführung des Gases dadurch erfolgt, dass es durch eine Wasserstrahlpumpe einem Abfallstoffstrom beigemengt wird, der von einer Pumpe aus einem Teil des Belüftungsbehälters zu einem anderen Teil des Belüftungsbehälters gepumpt wird.

2. Vorrichtung zur Durchführung des Verfahrens nach Anspruch 1, mit mindestens einem Belüftungsbehälter (11) und mindestens einer Belüftungsvorrichtung (31), wobei die Belüftungsvorrichtung (31) mit ihrem Eingang (33) an den Oberteil des Belüftungsbehälters (11) und mit ihrem Ausgang (35) an den Unterteil des Belüftungsbehälters angeschlossen ist, dadurch gekennzeichnet, dass durch den Anschluss der Belüftungsvorrichtung (31) an den Oberteil und Unterteil des Belüftungsbehälters (11) ein Kreislauf (11, 33, 31, 35, 44) für das aus den Abfallstoffen austretende Gas gebildet wird, dass der Kreislauf (11, 33, 31, 35, 44) eine Oeffnung (49) aufweist, um einen Sauerstoff-Konzentrationsausgleich zwischen dem im Kreislauf befindlichen Gas und der Umgebungsluft zu ermöglichen, und dass die Belüftungsvorrichtung eine Wasserstrahlpumpe (31) ist, durch welche mittels einer Pumpe (44) Abfallstoffe (13) von einem Behälterteil zu einem anderen Behälterteil gepumpt werden können.

3. Vorrichtung nach Anspruch 2, dadurch gekennzeichnet, dass die Oeffnung (49) durch ein Ventil (51) verschliessbar ist.

4. Vorrichtung nach einem der Ansprüche 2 und 3, dadurch gekennzeichnet, dass an der Oeffnung (49) ein Geruchfilter (53) angeschlossen ist.

5. Vorrichtung nach Anspruch 3 oder 4, dadurch gekennzeichnet, dass das Ventil (51) durch eine Sauerstoff- und/oder Kohlendioxidsonde entsprechend der Sauerstoff- und/oder Kohlendioxidkonzentration im Belüftungsbehälter (11) steuerbar ist.

6. Vorrichtung nach einem der Ansprüche 2 bis 5, dadurch gekennzeichnet, dass am Belüftungsbehälter (11) ein Wärmetauscher (61) vorgesehen ist, um die durch die Abfallstoffe erzeugte Wärme zu nutzen.

7. Vorrichtung nach einem der Ansprüche 2 bis 6, dadurch gekennzeichnet, dass ein Wärmetauscher (17) zum Vorwärmen des frischen Schlammes vor der Behandlung durch Entzug von Wärme aus dem behandelten Schlamm vorgesehen ist.

8. Vorrichtung nach Anspruch 7, dadurch gekennzeichnet, dass der Wärmetauscher ein Schlamm/Schlamm-Wärmetauscher ist.

9. Vorrichtung nach Anspruch 2, dadurch gekennzeichnet, dass der Kreislauf (11, 33, 67, 31) ein Ventil (65) aufweist, um Luftsauerstoff in den Kreislauf einzuführen.

10. Vorrichtung nach einem der Ansprüche 2-9, dadurch gekennzeichnet, dass der Unterteil des Belüftungsbehälters (11) an eine Vorlage (68) angeschlossen ist.

11. Vorrichtung nach Anspruch 10, dadurch gekennzeichnet, dass eine Entlüftungsleitung (75) von der Vorlage (68) zum Geruchfilter (53) führt.

12. Vorrichtung nach Anspruch 10 oder 11, dadurch gekennzeichnet, dass die Vorlage (68) zwei Kammern (69, 70) aufweist und dass Ventile (71 bis 74) vorgesehen sind, um diese Kammern (69, 70) abwechslungsweise zu füllen und zu leeren.

13. Vorrichtung nach Anspruch 12, dadurch gekennzeichnet, dass der Wärmetauscher (17) zum Vorwärmen des frischen Schlammes ein Durchfluss-Wärmetauscher ist.

14. Vorrichtung nach einem der Ansprüche 2 bis 13, dadurch gekennzeichnet, dass eine Stützheizung (63) für die von einem Behälterteil zu einem anderen Behälterteil umgepumpten Abfallstoffe vorgesehen ist.

15. Vorrichtung nach einem der Ansprüche 2-14, dadurch gekennzeichnet, dass oben im Belüftungsbehälter ein von einem Schaumfühler (12) gesteuerter Schaumschneider (10) vorgesehen ist.

**Claims**

1. A method of heating organic refuse in the form of sewage sludge or liquid manure by biological treatment, in which oxygen in the form of air is introduced into the refuse contained in a stationary aeration vessel (11), gas emerging from the refuse is at least partly recirculated into the refuse, recirculated gas is enriched with air, a temperature which is sufficient to kill enterobacteria is maintained, and excess heat is removed, characterized in that the recirculated gas is at least intermittently enriched by air by balancing the oxygen concentration between the gas in the circuit and the ambient air through an opening in the circuit, and in that recirculation of the gas takes place be introducing it by means of water jet pump into a stream of refuse which is pumped by a pump from one part of the aeration vessel to another part of the aeration vessel.

2. A system for carrying out the method according to claim 1, comprising at least one aeration vessel (11) and at least one aeration device (31), said aeration device (31) being connected with its input (33) to the upper part of the aeration vessel (11) and with its output (35) to the lower part of the aeration vessel, characterized in that the connection of the aeration device (31) to the upper and lower part of the aeration vessel (11) forms a circuit (11, 33, 31, 35, 44) for the gas emerging from the refuse, in that the circuit (11, 33, 31, 35, 44) comprises an opening (49) to provide a balancing of oxygen concentration between the gas in the circuit and the ambient air, and in that the aeration device is a water jet pump (31) through which by a pump (44) refuse can be pumped from one part of the vessel to another part of the vessel.

3. A system according to claim 2, characterized in that the opening (49) can be closed by a valve (51).

4. A system according to claim 2 or 3, characterized in that the opening (49) is connected to a deodorizing filter (53).

5. A system according to claim 3 or 4, characterized in that the valve (51) is controllable by an oxygen and/or carbon dioxyd sensor according to the oxygen and/or carbon dioxyd concentration in the aeration vessel (11).

6. A system according to one of the claims 2 to 5, characterized in that a heat exchanger (61) is provided at the aeration vessel (11) to utilize the heat generated by the refuse.

7. A system according to one of the claims 2 to 6, characterized in that a heat exchanger (17) is provided to heat, prior to treatment, the fresh sludge by removing heat from the treated sludge.

8. A system according to claim 7, characterized in that the heat exchanger is a sludge/sludge heat exchanger.

9. A system according claim 2, characterized in that the circuit (11, 33, 67, 61) comprises a valve (65) to introduce atmospheric oxygen into the circuit.

10. A system according to one of the claims 2 to 9, characterized in that the lower part of the aeration vessel (11) is connected to an intermediate storage vessel (68).

11. A system according to claim 10, characterized in that a deaerator pipe (75) leads from the intermediate storage vessel (68) to the deodorizing filter (53).

12. A system according to claim 10 or 11, characterized in that the intermediate storage vessel (68) comprises two chambers (69, 70), and in that valves (71 to 74) are provided to fill and empty these chambers (69, 70) alternatingly.

13. A system according to claim 12, characterized in that the heat exchanger (17) for heating the fresh sludge is a continuous flow heat exchanger.

14. A system according to one of the claims 2 to 13, characterized in that an auxiliary heater (63) is provided for the refuse pumped from one part of the vessel to another part of the vessel.

15. A system according to one of the claims 2 to 14, characterized in that in the upper part of the aeration vessel a foam cutter (10) controlled by a foam sensor (12) is provided.

**Revendications**

1. Procédé pour le réchauffage de déchets organiques sous forme de boues de curage ou de purin au moyen d'un traitement biologique, de l'oxygène sous forme d'air étant introduit dans les déchets contenus dans un récipient d'aération fixe (11), le gaz qui sort des déchets étant renvoyé au moins en partie, en circuit fermé, dans les déchets, le gaz recyclé étant enrichi d'air, une température qui est suffisante pour tuer des bactériacées intestinales étant maintenue et la chaleur en excès étant éliminée, caractérisé en ce que le gaz recyclé est enrichi en air, au moins temporairement, par le fait qu'un équilibrage de concentration d'oxygène entre le gaz qui se trouve dans le circuit fermé et l'air environnant se produit à travers une ouverture dans le circuit fermé, et en ce que le recyclage du gaz est effectué par le fait que celui-ci est ajouté, par une trompe à eau, à un courant de déchets qui est pompé, par une pompe, d'une partie du récipient d'aération vers une autre partie du récipient d'aération.

2. Dispositif pour l'exécution du procédé selon la revendication 1, comprenant au moins un récipient d'aération (11) et au moins un dispositif d'aération (31), le dispositif d'aération (31) étant relié par son entrée (33) à la partie supérieure du récipient d'aération (11) et par sa sortie (35) à la partie inférieure du récipient d'aération, caractérisé en ce qu'il est formé, par le raccordement du dispositif d'aération (31) à la partie supérieure et à la partie inférieure du récipient d'aération (11), un circuit fermé (11, 33, 31, 35, 44) pour le gaz qui sort des déchets, en ce que le circuit fermé (11, 33, 31, 35, 44) comporte une ouverture (49) pour permettre un équilibrage de concentration d'oxygène entre le gaz qui se trouve dans le circuit fermé et l'air environnant, et en ce que le dispositif d'aération est une trompe à eau (31) à travers laquelle des déchets (13) peuvent être pompés, au moyen d'une pompe (44), d'une partie du récipient vers une autre partie du récipient.

3. Dispositif selon la revendication 2, caractérisé en ce que l'ouverture (49) est obturable par une valve (51).

4. Dispositif selon la revendication 2 ou 3, caractérisé en ce qu'un filtre à odeurs (53) est raccordé à l'ouverture (49).

5. Dispositif selon la revendication 3 ou 4, caractérisé en ce que la valve (51) peut être commandée automatiquement par une sonde à oxygène et/ou une sonde à anhydride carbonique, en fonction de la concentration d'oxygène et/ou d'anhydride carbonique dans le récipient d'aération (11).

6. Dispositif selon l'une quelconque des revendications 2 à 5, caractérisé en ce qu'il est prévu, au niveau du récipient d'aération (11), un échangeur de chaleur (61) en vue de l'utilisation de la chaleur produite par les déchets.

7. Dispositif selon l'une quelconque des revendications 2 à 6, caractérisé en ce qu'il est prévu un échangeur de chaleur (7) pour le pré-chauffage des boues fraîches, avant leur traitement, par prélèvement de chaleur sur les boues traitées.

8. Dispositif selon la revendication 7, caractérisé en ce que l'échangeur de chaleur est un échangeur de chaleur boues/boues.

9. Dispositif selon la revendication 2, caractérisé en ce que le circuit fermé (11, 33, 67, 31) comporte une valve (65) pour l'introduction d'oxygène de l'air dans ce circuit.

10. Dispositif selon l'une quelconque des revendications 2 à 9, caractérisé en ce que la partie inférieure du récipient d'aération (11) est raccordée à un collecteur de gaz (68).

11. Dispositif selon la revendication 10, caractérisé en ce qu'une conduite d'évacuation d'air (75) s'étend entre le collecteur de gaz (68) et le filtre à odeurs (53).

12. Dispositif selon la revendication 10 ou 11, caractérisé en ce que le collecteur de gaz (68) comprend deux chambres (69, 70) et en ce qu'il est prévu des valves (71 à 74) pour remplir et vider alternativement ces chambres (69, 70).

13. Dispositif selon la revendication 12, caractérisé en ce que l'échangeur de chaleur (17) pour le pré-chauffage des boues fraîches est un échangeur de chaleur à passage continu.

14. Dispositif selon l'une quelconque des revendications 2 à 13, caractérisé en ce qu'il est prévu un chauffage d'appoint (63) pour les déchets circulant par pompage entre une partie du récipient et une autre partie du récipient.

15. Dispositif selon l'une quelconque des revendications 2 à 14, caractérisé en ce qu'il est prévu, en haut dans le récipient d'aération, un brise-mousse (10) commandé automatiquement par un détecteur de mousse (12).

Fig. 1

0 053 777

Fig. 2

0 053 777